# EUROPEAN PATENT APPLICATION

(11) **EP 1 535 696 A1**
(43) Date of publication of application: **01.06.2005**
(21) Application number: 04105840.5
(22) Date of filing: 17.11.2004
(51) Int. Cl.: B23K 26/34, B23K 26/08

(54) **Apparatus for coating tubes by means of laser beam and relative method**

(30) Priority: 25.11.2003 IT MI20032296
(71) Applicant: CESI-Centro Elettrotecnico Sperimentale Italiano Giacinto Motta S.p.A., 20134 MILANO (IT)
(72) Inventor: Fantini, Vincenzo, 20099 Sesto san Giovanni (MI) (IT); Bertoni, Cesare, 20060 Pozzuolo Martesana (MI) (IT); Cernuschi, Federico, 20133 Milano (IT); Fantini, Maurizio, 20090 Segrate (MI) (IT)
(74) Representative: Mittler, Enrico

(57) **Abstract**

The present invention describes an apparatus for coating a tube (10) comprising first means (5, 9, 90) suitable for feeding a coating material (4) onto the surface of the tube (10) and a first device (1) suitable for fixing said coating material (4) onto the surface (100) of the tube (10) by means of a laser beam (3, 30). The apparatus comprises moreover second means (20) suitable for the relative translation of said first device (1) and of said tube (10) along the axis (P) of the same tube (10) and third means (32) suitable for the rotation of the tube (10) around its axis (P) so that the combination of the action of said second (20) and of said third (32) means permits a spiral deposition of the coating on the tube (10). The apparatus also comprises a second device (50, 60, 70) suitable for cooling the tube (10) from inside.

## Description

The present invention refers to an apparatus for coating tubes by means of laser beam and relative method.

Methods for protection from the corrosion and/or from the erosion of tubes or geometrically cylindrical plant components such as for example the tubes of boilers, the tubes of the coils of the superheater benches, the tubes of economizers or of heat exchangers are generally known. The plants in which the above mentioned tubes or cylindrical geometry components are installed can be, for example, solid urban waste incinerators, the fluidised bed plants for the elimination of waste or generating stations for the production of electric energy from fossil fuels, from geothermal steam or from biomasses, or chemical plants.

The tubes of boilers, of superheater benches, of economizers of plants for the incineration of waste and of generating stations for the production of electrical energy, especially if they use high-sulphur-content fuels, are subject to heavy corrosion action during operation, to which erosive action is also added in certain cases. In waste incineration plants the corrosion is originated by the chlorine content in the waste and by its compounds that are released during the combustion process. In the case of electrical energy production plants the corrosion derives from the sulphur contained in the fuel and from its compounds that are released during the combustion process. The rate of corrosion of the thickness of the tubes depends on the operating temperatures. In fact if the operating temperature of the plant increases its efficiency increases as well as the temperature at the surface of the tubes or of the components mentioned above increases and the rate of their corrosion augments. The latter can reach in certain cases 10-12 mm per year of operation and can often determine the bursting of the tube with the consequent halt of the plant for its replacement. Phenomenon of corrosion on the components usually appear quite considerably in the area of temperature of between 300°C and 1000 °C.

The erosive action is due to the erosive agents present in the operating environment of some of the plants mentioned above; said corrosive agents are formed for example by solid particulate, by ashes or by fuel in powder.

The methods for protection from the corrosion of the tubes or of the components mentioned above at the present state of the art are of three types.

The first method consists of replacing the tubes of the plants with other tubes made up of two different materials that are simultaneously co-extruded generating a tube composed of two coaxial parts: the inside part is constituted by the original material of the tube that supports the project loads, while the external part is constituted by a sheathing in very close contact with the internal part but made with a corrosion-resistant material. With this method the tubes of complete boilers and superheater benches can be produced. The disadvantages of this method concern the low reliability of such co-extruded tubes as the two materials making up the tube have different dilatation coefficients and can have different elongations; this can lead to localized detachment between the two materials, above all in the curved sections (e.g. joints, elbows, curves). The local detachment leads to a drop in the capacity of the thermal exchange of the tube and thus its overheating that often makes the tube explode, leading to the plant stopping for its replacement. The second inconvenience is constituted by the high cost of the co-extruded tube in comparison to the traditional unprotected tube.

The second method of protection from the corrosion of the tubes or of the components mentioned above at the present state of the art is the application of a layer of coating material, resistant to corrosion, on the external surface of the tube or of the component carried out by means of a traditional welding process. Traditional welding processes that are used for that purpose are submerged-arc welding and gas-tungsten arc welding with tungsten electrode and inert gases (GTAW, TIG). These welding processes are carried out manually and directly on the tubes mounted in the above mentioned plants, or in the workshop on the single tubes not assembled with automatic machines or manually. The disadvantage of this method lies in the high thermal load that is intrinsic in conventional welding processes. The arc torch that melts the coating material of the covering layer also generates considerable heating of the base material of the tube on whose surface the layer is welded. The overheating of the base material of the tube causes a dilution of several of its alloy elements (for example the iron) from the inside of the thickness of the tube in the melted covering layer, heavily altering its original chemical composition and reducing its resistance to corrosion. For example, if a covering layer is carried out with gas-tungsten arc welding (GTAW, TIG), using as coating material the alloy H625 having an original content of iron of 3-4%, in the welded covering layer the percentage of iron is typically 25-30%. To lower the content of contamination in the covering layer it is carried out several times (typically two or three) until a composition very similar to the original one of the coating material is obtained on the surface of the covering layer and in the layer immediately underneath; in this manner its characteristics of resistance to corrosion are restored. For example to obtain a covering layer with good resistance to corrosion, with the conventional welding techniques mentioned above, covering layers have to be applied several times with total thicknesses typically of 2.7-4 mm on tubes with original thicknesses typically of 4.5 -7.5 mm. This fact presents two disadvantages the first is constituted by the high consumption of coating material and the second is constituted by the decrease of the capacity of thermal exchange of the coated tube in comparison to the non-coated tube; this depends on the fact that the coating material, applied in anti-corrosive function, has considerably lower thermal exchange properties than those of the base of the tube.

The third method consists in the application of a protective coating by means of a thermal-spraying process, such as the HVOF (High Velocity Oxi-Fuel) process or with flame torch and coating material in wire. In the thermal-spraying processes the coating material in powder or in wire is projected by the torch, by means of an inert carrier gas that comes out from the end nozzle of the torch at medium-high speed, on the surface of the tube or component to coat where it adheres by kinetic impact. The coating that is obtained is not therefore anchored to the original surface of the tube by means of metallurgic anchoring (fusion of the surface of the tube during the process) that ensures extremely high adhesion, as comes about in the weld overlay processes described above. The advantage of the thermal spraying method in comparison to the traditional weld overlay lies in the fact that the chemical composition of the coating material is not significantly varied in the coating in comparison to the original and therefore the resistance to corrosion of the coating is that of the original coating material. The disadvantages of the thermal spraying method are basically three: the first is that the thicknesses of the coating that can be deposited are limited (typically 0.2-0.4 mm); the second is that the coating is porous and the passage of the corrosive agents is facilitated in comparison to the overlay obtained with traditional welding; the third is that the adhesion of the coating is low and per example it is not possible to bend a coated tube to make a curve without generating cracks or fissures in the coating or detaching it from the original surface of the tube, annulling the protection from corrosion.

In view of the state of the art, object of the present invention is to provide an apparatus for coating tubes by means of laser beam that prolongs the operating life of the tubes, consistently reducing the rate of corrosion and/or erosion of the tube or of the component.

In accordance with the present invention this object is achieved by means of an apparatus for coating a tube comprising first means suitable for feeding a coating material onto the surface of the tube, a first device suitable for fixing said coating material onto said surface of the tube by means of a laser beam, characterised in that it comprises second means suitable for the relative translation of said first device and of said tube along the axis of the same tube and third means suitable for rotating the tube around its axis so that the combination of the action of said second and of said third means enables the coating to be spirally deposited on the tube, said apparatus comprising a second device suitable for cooling the tube from inside.

Preferably said second device is suitable for cooling the tube by means of a passage of fluid through the tube.

Still in accordance with the present invention a method for coating tubes by means of laser beam as defined in claim 14 can be provided.

Thanks to the present invention an apparatus for coating tubes can be provided which with the use of a laser beam considerably reduces the thermal load to which the tube to be coated is submitted during the deposition process in comparison with the known coating apparatus for tubes.

In addition the application of the coating material on the surface of the tube by means of a laser beam permits excellent adhesion of the coating material to the tube since the bonding is of the metallurgic type.

The characteristics and advantages of the present invention will appear evident from the following detailed description of an embodiment thereof, illustrated as non-limiting example in the enclosed drawings, in which:
Figure 1 is a diagram of the apparatus according to a first embodiment of the present invention;
Figure 2 shows in more detail the laser device of the apparatus of Figure 1;
Figure 3 is a section according to the line III-III of the head of the laser device of Figure 2;
Figure 4 is a bottom view of the head of the laser device of Figure 2;
Figure 5 is a section according to the line V-V of the head of the laser device of Figure 4;
Figure 6 shows in detail a part of the coated tube of Figure 1;
Figure 7 shows schematically the cooling device of the tube of Figure 1;
Figure 8 shows schematically the cooling device for the tube of Figure 1 according to a second embodiment of the invention;
Figure 9 shows schematically the cooling device for the tube of Figure 1 according to a third embodiment of the invention;
Figure 10 shows an alternative method for producing the translation of the laser device along the axis of the tube.

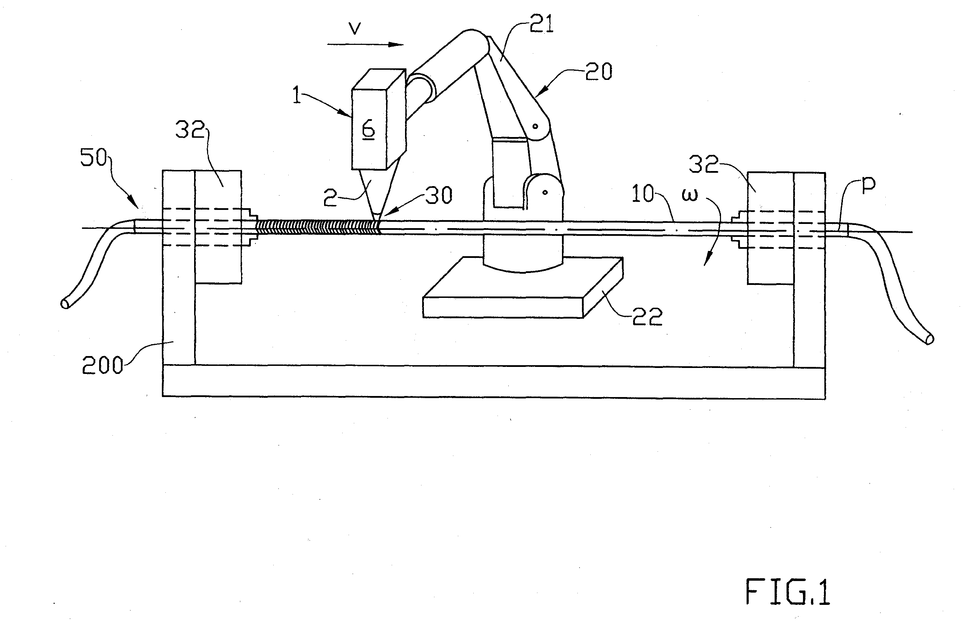

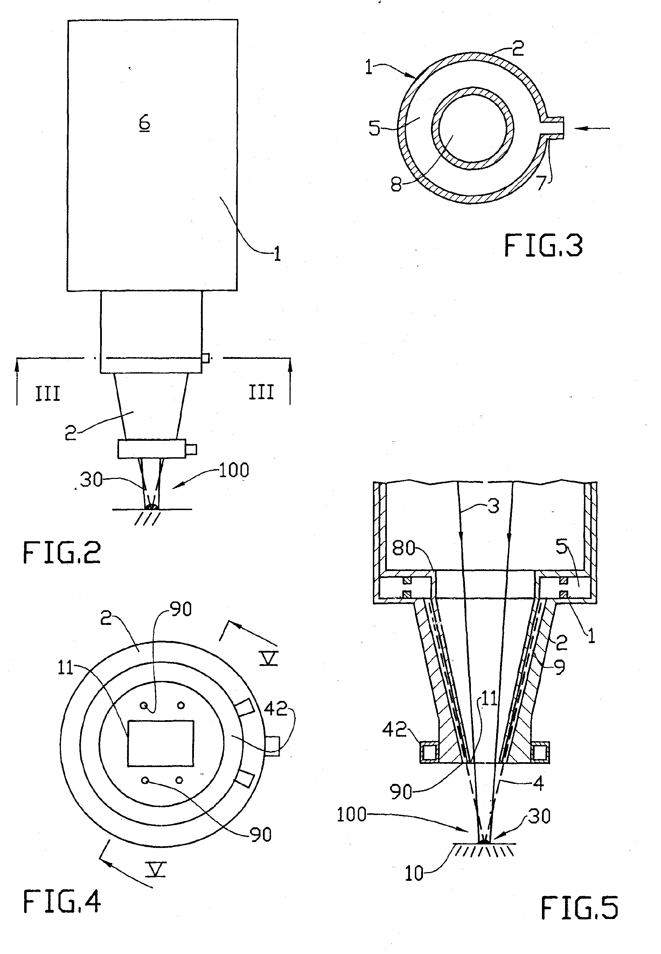

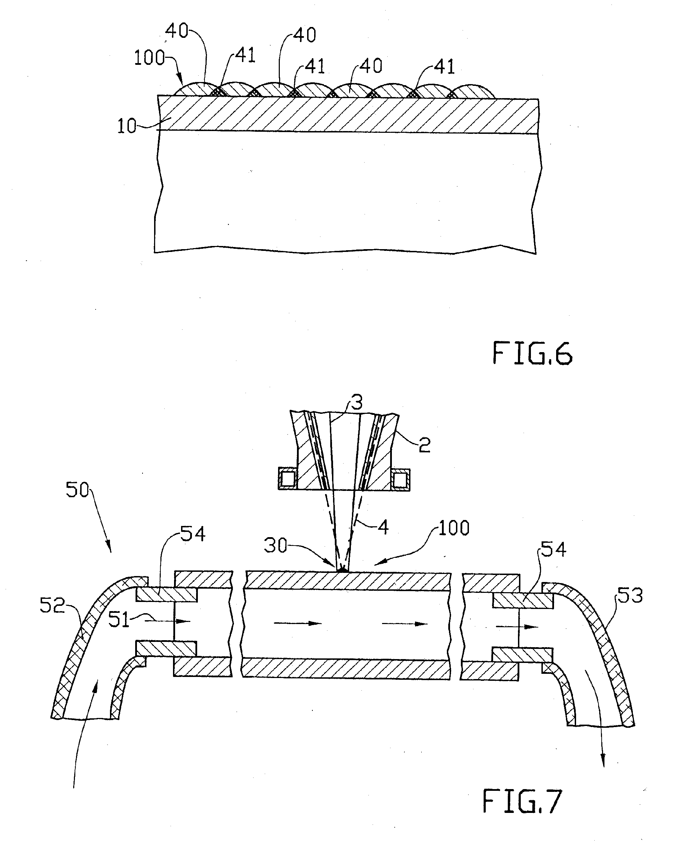

Figures 1-6 show an apparatus for coating a tube 10 by means of laser according to a first embodiment of the invention. Said apparatus comprises a laser device 1 comprising a laser source 6, preferably a diode laser but also a CO₂ or a Nd-YAG source. The laser device 1, more visible in Figures 2-5, comprises a head 2 from which the laser beam 3 comes out together with the material 4 for coating the tube present in the form of powder inside the head 2 in a containment and turbulence chamber 5 (Figure 3). Said material 4 is preferably made of a metallic alloy such as, for example, the alloy H625 and is fed to the chamber 5 through a suitable input 7. The chamber 5 has a ring shape and surrounds an internal cavity 8 suited for the passage of the laser beam 3 coming from the source laser 6; the chamber 5 has output conduits 9 (Figure 5) positioned along the head 2 and terminating in output holes 90 on the bottom of the head 2 (Figure 4). Said holes 90 are inclined in relation to a vertical axis so that the laser beam 3 coming out of the opening 11 reacts with the powder that comes out from said holes 90 to fix it on the surface of the tube 10 positioned on a support 200.

The head 2 is preferably provided with an optic device, not visible in the Figures which, in the case in which the laser source is a diode laser, is constituted by two cylindrical crossed lens, in the case in which the laser source is of the CO₂ type said optic component is constituted by a lens or by an optic integrator that can be made with a faceted lens or with a faceted mirror and in the case in which the laser source is of the Nd-YAG type said optic component is constituted by a lens or by an optic integrator that can be made with a faceted lens. The optic device is suitable for transforming the intensity profile of the laser beam 3 coming from the laser source 6 into a spot 30 having a rectangular shape and an intensity profile approximately flat in the direction parallel to the axis P of the tube 10. In the case in which the laser source 6 is constituted by a diode laser the optic component can also not be provided for, as for the laser device 1 of Figures 1-5. In this case the cavity 8 crossed by the laser beam 3 has the shape of a conduit having a circular opening 80 in proximity to the laser source 6 and the rectangular opening 11 on the bottom of the head 2; the laser beam 3, generated with a rectangular shape from the diode laser source 6, is collimated on the portion 100 of the external surface of the tube 10 in the spot 30 having a rectangular shape.

The laser device 1 also comprises heat dissipating means 42, constituted for example by a copper ring, positioned around the lower extremity of the head 2 (Figures 4 and 5). The laser beam 3 and above all the laser radiation backscattered by the portion 100 of the external surface of the tube 10, during the application of the coating, determine an excessive overheating of the extremity of the head 2 that can lead to a fusion of the part of the head in which the opening 11, the end part of the conduits 9 and the holes 90 are positioned.

In alternative the laser device 1 can also not comprise the chamber 5 containing the material 4, the conduits 9 and the holes 90. In this case the material 4 in the form of powder is sprayed on the portion 100 of the external surface of the tube 10 by means of special spraying means outside the head 2.

The apparatus is provided with first means 20 suitable for translating the laser device 1 along the main axis P of the tube 10 and second means 32 suitable for rotating the tube 10 around the axis P. The combination of the translation of the device 1 and the rotation of the tube 10 must permit a spiral deposition of the coating on the tube 10. Said first means 20 are formed by an extendable arm 21 to which the laser device 1 is connected; said extendable arm 21 is connected to a stable platform 22 and is moved so as to ensure translation of the device 1 along the main axis P of the tube 10 preferably at a constant speed v.

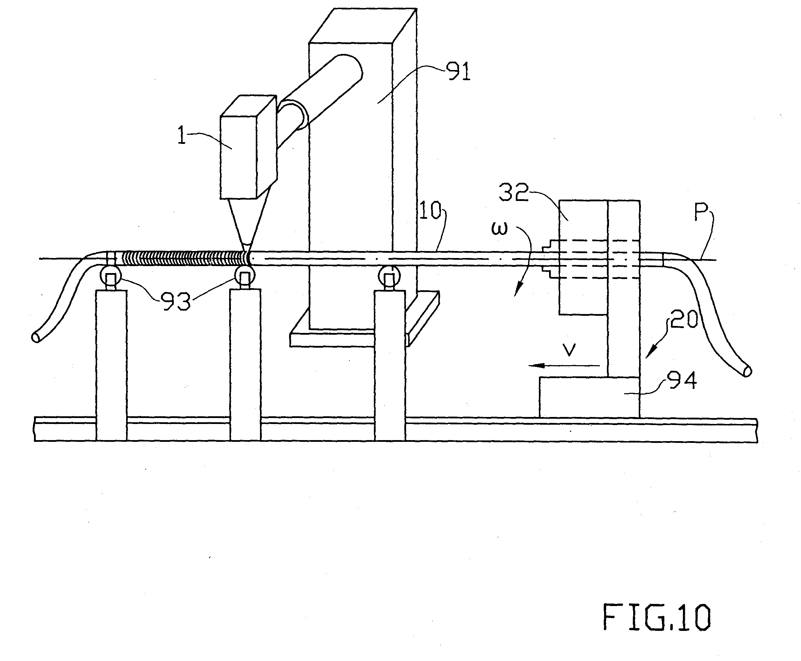

Of course this translation movement can also be obtained holding the device 1 still and moving the tube 10 axially, for example as shown in Figure 10.

The second means 32 are movement means constituted for example by an electric motor and determine a rotation of the tube 10 around the main axis P of the tube 10 and preferably at a constant speed ω.

The laser beam 3 in output from the device 1 melts the portion 100 of surface of the tube 10 exposed to the laser beam; the powder of the coating material 4 coming from the holes 90 is deposited on said portion 100 and is therefore welded by means of metallurgic process. The rectangular shape of the opening 11 permits a disposition of the holes 90 closer to the output of the laser beam 3. The rectangular conformation of the spot laser 30 on the external surface of the tube 10 increases the efficiency of the deposition, which results advantageously uniform for the entire transversal extension of the coating. A bead of the coating material 4 welded on the external surface of the tube 10 is generated in a spiral shape with the turns 40 partially overlapping, as can be seen in Figure 6. A variation of the portion 41 of overlapping of turns 40 permits the variation of the minimum thickness of the coating material on the surface of the tube 10.

The apparatus also comprises a device 50, seen better in Figure 7, for cooling the tube 10 from inside during the coating operation with the material 4 to compensate the excessive heating of the tube 10 during said coating operation. Preferably said device 50 forces the passage of a fluid 51 inside the tube 10 to cool it; the fluid 51 can be constituted of air, preferably compressed air, or of water or of a combination of air and nebulized water. The conduits 52 and 53 are provided for respectively for the input and the discharge of the fluid 51 and hermetically held rotating joints 54 are provided for to connect the conduits 52 and 53 to the tube 10 placed in rotation by means 32.

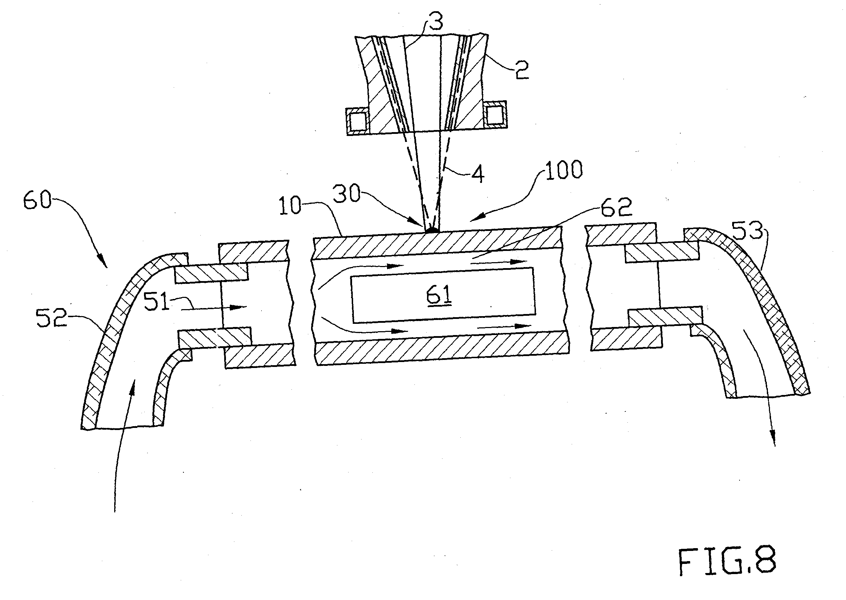

In Figure 8 an apparatus according to a second embodiment of the invention is shown. Said apparatus differs from the apparatus of the first embodiment for the presence of a different device 60 for cooling the tube 10. Said device 60 differs from cooling device 50 for the presence of a cylinder 61 of smaller diameter than the internal one of the tube 10, closed at the extremities and inserted inside the tube 10. In this manner the fluid 51 flows through the space 62 created between the cylindrical external surface of the cylinder 61 and the internal surface of the tube 10; this improves the cooling of the tube 10 in relation to the use of the device 50.

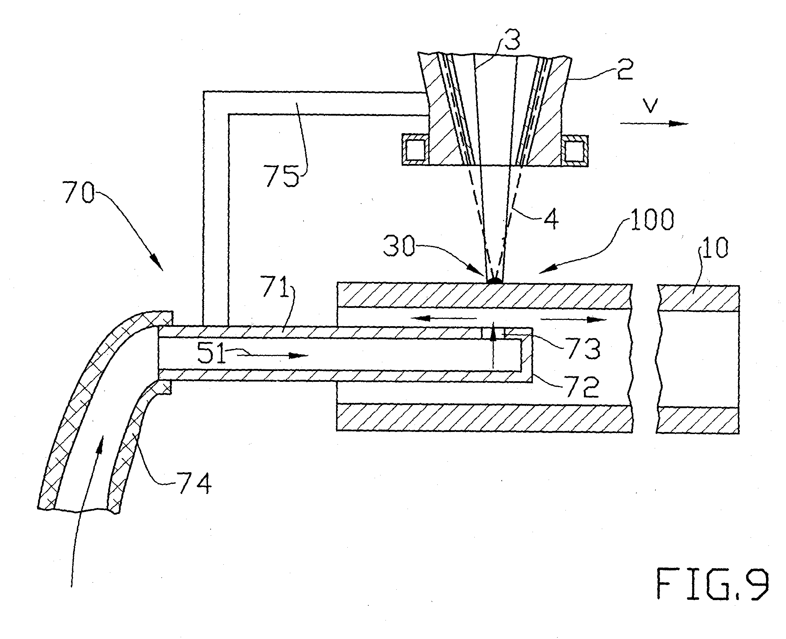

Figure 9 an apparatus according to a third embodiment of the invention is shown. Said apparatus differs from the apparatus of the first embodiment for the presence of a different device 70 for cooling the tube 10. Said device 70 comprises a tube 71 having an external diameter lower than the internal diameter of the tube 10. The tube 71 is closed at one extremity 72 but in proximity of it there is a hole 73 from which the fluid 51 flows out. Said fluid 51 is introduced into tube 71 by means of a conduit 74 outside the tube 10. The tube 71 is moved inside the tube 10 by means of movement means 75 that preferably are formed of an arm that connects said conduit 71 to the laser device 1. In this manner the conduit 71 translates inside the tube 10 along its main axis P with the same speed v of translation as the laser device 1 and the hole 73 for the output of the fluid 51 is positioned in correspondence with the portion 100 on which the laser beam 3 acts. In this manner the portion of tube 10 involved with the coating with material 4 is cooled better.

Other movement means of the conduit 71 can be made up of mechanical means suitable for ensuring that the speed of translation of the conduit 71 is equal to that of the laser device 1.

The coating operation of the tube 10 using the apparatus according to the invention comes about in accordance with the following method.

After the same tube 10 is positioned on the support 200 the laser device 1 fixes the coating material 4, fed onto surface of the tube by means of the head 2 of the same device 1 or other feeding means, on a first portion 100 of the external surface of the tube 10 using the laser beam 3 coming from the source 6 and suitable for creating the spot 30 on the portion 100.

Simultaneously with the action of the laser device 1 there is a translation of the device 1 along the main axis P of the tube 10, preferably at a constant translation speed v, by means of the action of the arm 21 and a contemporary rotation of the tube 10 around the axis P, preferably at a constant rotation speed ω, by means of the movement means 32 so as to coat other portions 100 of the surface of the tube 10 and produce a spiral deposition of the coating on the same tube.

During said operation of coating the tube 10 there is a cooling of the tube from inside, and more in particular of the portion of the tube involved with the coating with material 4, preferably by means of the device 50, 60 or 70 suitable for the passage of the fluid 51 inside the tube 10.

The use of a laser beam to produce a covering layer presents at least three advantages in comparison to the traditional methods described. The thermal load to which the tube to be coated is submitted during the coating process carried out with a laser beam is several factors lower than that of the covering layers applied with the known traditional welding techniques. Consequently the dilution of the base material of the tube to be coated in the covering layer is minimum and the chemical composition of the covering layer is insignificantly modified in comparison to the original composition of the coating material. Therefore the properties of resistance to corrosion or to the erosion of the coating material remain unaltered in the covering layer applied to the tube or to the component. For example, if a covering layer is applied to a tube, using a laser beam, the coating material constituted by the alloy H625 with an iron content equal to 1%, in the covering layer made with only one pass the iron content on the exposed surface of the covering layer and in the layers immediately below is typically between 5%-7%, that is a factor 4-6 lower in comparison to the known tradition welding techniques.

Therefore, differently from the covering layers made with the known traditional welding methods, the method subject of the present invention permits the application in only one pass of a covering layer with chemical composition very similar to the original one of the coating material and thus permits a considerable reduction of the quantity of coating material to be applied to the tube or to the component to have a coating with high resistance to corrosion.

Differently from the thermal spraying technique described previously, the coating applied with a laser beam, being a superficial welding process on the base material of the tube, has a metallurgic type bonding to the base material that ensures high adhesion. A tube or a component to which a weld overlay has been applied using a laser beam can therefore be bent to make curves and joints without the coating undergoing damage such as cracks, fissures or detaching from the base material.

Figure 10 shows an alternative method for producing the translation of the laser device along the axis of the tube. In this case the laser device 1 is held still as bonded to a non-extendable mount 91 and the tube 10, in addition to being rotated by means 32, rests on rollers 93 and is translated along the main axis P of the tube 10 by means of said second means 20, made up of a trolley 94 having preferably a constant translation speed v; the means 32 are in one with the trolley 94 and are connected at one end of the tube. Said alternative method is used above all in the case in which the tube 10 is of large dimensions.

## Claims

1. Apparatus for coating a tube (10) comprising first means (5, 9, 90) suitable for feeding a coating material (4) onto the surface of the tube (10), a first device (1) suitable for fixing said coating material (4) on said surface (100) of the tube (10) by means of a laser beam (3, 30), **characterised in that** it comprises second means (20) suitable for the relative translation of said first device (1) and of said tube (10) along the axis (P) of the same tube (10) and third means (32) suitable for rotating the tube (10) around its axis (P) so that the combination of the action of said second (20) and of said third means (32) permits a spiral deposition of the coating on the tube (10), said apparatus comprising a second device (50, 60, 70) suitable for cooling the tube (10) from inside.

2. Apparatus according to claim 1, **characterised in that** said first device (1) comprises a diode laser source (6) and a head (2) for irradiation of the laser beam (3).

3. Apparatus according to claim 2, **characterised in that** said means (5, 9, 90) for feeding the coating material (4) are associated to said first device (1).

4. Apparatus according to claim 3, **characterised in that** said means (5, 9, 90) for feeding the coating material (4) comprise a containment and turbulence chamber (5) and conduits (9) positioned along the head (2) of said first device (1) and holes (90) for the output of said coating material (4) positioned on the bottom of the head (2).

5. Apparatus according to claim 1, **characterised in that** said second device (50, 60, 70) is suitable for cooling the tube (10) by means of the passage of a fluid (51) inside the tube (10).

6. Apparatus according to claim 5, **characterised in that** said second device (50, 60) comprises a first conduit (52) for the input of the fluid (51) inside the tube (10), a second conduit (53) for the output of the fluid (51) and rotating joints (54) positioned between said conduits (52, 53) and the respective extremities of the tube (10).

7. Apparatus according to claim 6, **characterised in that** said second device (60) comprises a further tube (61) closed at the extremities and positioned inside the tube (10) to be coated.

8. Apparatus according to claim 5, **characterised in that** said second device (70) comprises a further tube (71) fed with said fluid (51) by means of a conduit (74) and positioned inside the tube (10) to be coated, said further tube (71) being translatable along the axis (P) of the tube to be coated with the same speed as the speed of translation of the first device (1), said further tube (71) being closed at the extremity (72) not connected to said conduit (74) and presenting a hole (73) for the output of the fluid (51) in proximity of the part of the tube (10) corresponding to the portion (100) of surface of the tube involved in the coating.

9. Apparatus according to claim 8, **characterised in that** said second device (70) comprises means (75) for connecting said further tube (71) with the head (2) of said laser device (1).

10. Apparatus according to claim 1, **characterised in that** said second (20) and said third means (32) respectively control a constant translation speed (v) of the first device (1) and a constant rotation speed (ω) of the tube (10) to be coated.

11. Apparatus according to claim 1, **characterised in that** said second means (20) provide for the movement of the first device (1) in relation to the tube (10).

12. Apparatus according to claim 1, **characterised in that** said second means (20) provide for the movement of the tube (10) in relation to the first device (1).

13. Apparatus according to claim 1, **characterised in that** said first device (1) produces a rectangular spot laser (30) on the portion (100) of the surface of the tube (10) involved by the coating.

14. Method for coating a tube (10) comprising feeding coating material (4) onto the external surface of the tube (10) and fixing said material (4) on said external surface of the tube (10) by means of a laser beam (3, 30) produced by a first device (1), **characterised in that** it comprises a relative translation of said first device (1) and of said tube (10) along the axis (P) of the same tube (10) and a contemporary rotation of the tube (10) around said axis (P) so as to produce a spiral deposition of the coating on the tube (10), said method comprising cooling the tube (10) from inside.

15. Method according to claim 14, **characterised in that** said cooling of the tube (10) comes about by means of passage of a fluid (51) inside the tube (10).

16. Method according to claim 14, **characterised in that** said translation of the first device (1) comes about at constant speed (v) and said rotation of the tube (10) comes about at constant speed (ω).
